# EUROPÄISCHE PATENTANMELDUNG

(11) **EP 1 584 403 A1**
(43) Veröffentlichungstag der Anmeldung: **12.10.2005**
(21) Anmeldenummer: 04008241.4
(22) Anmeldetag: 05.04.2004
(51) Int. Cl.: B23K 11/31, B25J 19/00

(54) **Kraftübertragungseinrichtung, insbesondere für den Zangenausgleich einer Schweisszange**

(71) Anmelder: Harms & Wende GmbH & Co. KG, 21079 Hamburg (DE); Düring Schweisstechnik GmbH, 86343 Königsbrunn (DE)
(72) Erfinder: Jansen, Thomas, Dr., 22549 Hamburg (DE); Diercks, Stefan, 21218 Seevetal (DE); Schmidt, Carsten, 21354 Bleckede (DE); Löser, Ralf Ernst, Dr., 23558 Lübeck (DE); Motz, Friedrich, 86343 Königsbrunn (DE); Kreiser, Gerhard, 86157 Augsburg (DE)
(74) Vertreter: Glawe, Delfs, Moll

(57) **Zusammenfassung**

Die Kraftübertragungsvorrichtung insbesondere für den Zangenausgleich einer Schweißzange weist zwei zueinanderbewegliche Teile (12, 14) auf, die unter der Vorspannung einer Feder (18) stehen. Die Verlängerung/Verkürzung der Vorrichtung ist dabei proportional zur darauf ausgeübten Zug/Druckkraft. Bei einer vorteilhaften Ausführungsform kann die Verlängerung/Verkürzung durch einen Abstandssensor (23) bestimmt werden, der mit einer konischen Fläche (24) zusammenwirkt.

## Beschreibung

Die Erfindung betrifft eine Kraftübertragungsvorrichtung, insbesondere aber nicht ausschließlich für den Zangenausgleich einer Schweißzange, mit ersten und zweiten Elementen, von denen eines mit einem Antrieb und das andere mit einem angetriebenen Teil verbindbar ist.

Schweißzangen für das Elektroschweißen, mit dem Bleche miteinander verschweißt werden können, werden häufig in Schweißrobotern eingesetzt. Zu diesem Zweck ist die Schweißzange mit ihren beiden Armen schwenkbar an einem Bauteil des Roboters befestigt. Die beiden Schweißarme der Schweißzange mit den an den Schweißarmen befestigen Schweißelektroden können durch einen Antrieb aufeinanderzubewegt werden, damit die Bleche zwischen den Schweißelektroden eingeschlossen, durch dieselben zusammengedrückt und verschweißt werden können. Dazu muss die Schweißzange zunächst durch den Roboter grob an die richtige Stelle verfahren werden. Anschließend muss zunächst eine der Elektroden an die Bleche herangefahren werden. Die entsprechende Feinsteuerung erfolgt dabei nicht durch den Antrieb des Roboters, sondern durch einen sogenannten Zangenausgleich. Berührt die eine Elektrode die Bleche, so kann die andere mit Hilfe des erwähnten Antriebs von der anderen Seite an die Bleche herangefahren werden, und der Schweißvorgang kann beginnen.

Es ist bekannt, für den Zangenausgleich eine elektrisch betriebene Stelleinrichtung zu verwenden (DE 202 09 668 U1).

Auch ein pneumatischer oder hydraulisch betriebener Antrieb für den Zangenausgleich ist bekannt (De 202 09 668 U1, DE 195 34 845 C1).

Der Nachteil des bekannten elektrischen Antriebs besteht darin, dass zwar über Positionssensoren der Ort der Schweißelektroden verfolgt werden kann, die Anpresskraft aber nicht oder nur sehr ungenau durch Anwachsen des Strom im Stellmotor festgestellt werden kann. Pneumatische und hydraulische Systeme sind hierfür zwar besser geeignet, erfordern aber einen komplizierten Steuerungsaufwand. Außerdem muss ein pneumatischer und hydraulischer Antrieb vorgesehen werden, der bei Schweißautomaten, die elektrisch betrieben werden, häufig nicht vorhanden ist.

Die Aufgabe der Erfindung besteht in der Schaffung einer Kraftübertragungsvorrichtung, die sich insbesondere aber nicht ausschließlich für den Zangenausgleich verwenden lässt, mit der die Andrückkraft des Zangenarms und der Elektrode gezielt gesteuert und gemessen werden kann.

Die erfindungsgemäße Lösung besteht bei einer Kraftübertragungsvorrichtung der eingangs genannten Art darin, dass das zweite Element im ersten Element der Kraftübertragungsrichtung verschiebbar gelagert ist, dass im ersten Element zwei in Kraftübertragungsrichtung verschiebbare Anschläge gelagert sind, zwischen denen eine Druckfeder angeordnet ist, die die Anschläge im Ruhezustand gegen in Kraftübertragungsrichtung einander gegenüberstehende Anschlagflächen des ersten Elements drückt, und dass das zweite Element einen ersten Vorsprung, mit dem der erste Anschlag von seiner Anschlagfläche abhebbar ist, und einen zweiten Vorsprung aufweist, mit dem der zweite Anschlag von seiner Anschlagfläche abhebbar ist.

Ähnlich wie bei der vorbekannten Schweißzange (DE 202 09 668 U1) erfolgt also der Zangenausgleich durch einen Antrieb im wesentlichen spielfrei. Insbesondere kann dabei bei einer besonders einfachen Ausführungsform ein elektrischer Antrieb verwendet werden. Solange keine wesentlichen Kräfte übertragen werden müssen, d. h., solange die Schweißzange durch den Roboter nicht stark beschleunigt wird oder eine Elektrode gegen das zu verschweißende Blechstück anliegt, ist die Kraftübertragungsvorrichtung im wesentlichen starr aufgrund der Federvorspannung. Wird auf die Kraftübertragungsvorrichtung ein Druckkraft ausgeübt, so verkürzt sie sich, wobei die Verkürzung proportional zur übertragenden Kraft ist. In diesem Fall wird einer der Anschläge in Richtung auf den anderen Anschlag gedrückt, wodurch die Feder zusammengedrückt wird. Wird eine Zugkraft auf die Kraftübertragungsvorrichtung ausgeübt, so verlängert sich dieselbe, indem der andere Anschlag gegen den ersten gezogen wird, wodurch die Feder ebenfalls zusammengedrückt wird. Auch hier ist die Verlängerung proportional zur Kraft.

Wenn eine genügend große Kraft angewendet wird (Zugkraft oder Druckkraft) so wird die Feder ganz zusammengepresst, so dass die Kraftübertragungsvorrichtung als starres Kraftübertragungselement wirkt. Dies kann z. B. ausgenutzt werden, um den Zangenarm, an dem der Zangenausgleich angreift, während des Verfahrens durch den Roboter fest gegen einen Anschlag zu drücken, damit die Zangenarme sich nicht aufgrund der Roboterbeschleunigungen in unerwünschter Weise bewegen.

Da die Kraftübertragungsvorrichtung elastisch nachgeben kann, kann in vielen Fällen der Anpressdruck der Schweißelektrode, die sich an dem Zangenarm befindet, der mit dem Zangenausgleich versehen ist, recht genau lediglich aufgrund der Auslenkung des Zangenausgleichs bestimmt werden. In vielen Fällen wird man aber eine Einrichtung zum Anzeigen und/oder Messen von Änderungen der Kraftübertragungsvorrichtung vorsehen. Diese Änderungen der Länge sind wie erwähnt proportional zur Kraft, so dass auf diese Weise der Anpressdruck der Elektrode an die Bleche bestimmt werden kann. Es ist dann möglich, wenn der gewünschte Anpressdruck erreicht ist, dass dann die andere Elektrode an die zu verschweißenden Bleche herangefahren wird und der Schweißvorgang beginnen kann. Auf diese Weise ist es sehr schnell und zuverlässig möglich, die richtigen Anpressdrucke zu erreichen, so dass der Schweißvorgang schneller beginnen kann, und die Taktzeiten erhöht werden können.

Zweckmäßigerweise umgreift das erste Element der Kraftübertragungsvorrichtung das zweite Element hülsenförmig. Als Druckfeder könnte zwar eine Gasfeder verwendet werden. Als besonders vorteilhaft hat sich aber eine Schraubenfeder erwiesen. Dabei sind zweckmäßigerweise die Anschläge das zweite Element umschließenden Scheiben. Dabei umschließt zweckmäßigerweise die Druckfeder das zweite Element.

Die erwähnte Einrichtung zum Anzeigen und/oder Messen von Änderungen der Länge der Kraftübertragungsvorrichtung weist zweckmäßigerweise eine konische Fläche an einem und einen Abstandssensor am anderen Element auf. Ändert sich die Länge der Kraftübertragungsvorrichtung und damit die relative Stellung der ersten und zweiten Elemente, so kommt die Oberfläche der konischen Fläche näher an den Abstandssensor heran oder entfernt sich von demselben, was dann als Längensignal ausgegeben werden kann. Zweckmäßigerweise ist dabei die konische Fläche am zweiten Element und der Abstandssensor im ersten Element angeordnet.

Wie erwähnt ist die Kraftübertragungsvorrichtung insbesondere für den Zangenausgleich einer Schweißzange, aber nicht ausschließlich für diesen Zweck geeignet. Eine erfindungsgemäße Schweißzange mit Zangenausgleich zeichnet sich dadurch aus, dass sie die erwähnte Kraftübertragungsvorrichtung aufweist.

Die Erfindung wird im folgenden anhand einer vorteilhaften Ausführungsform unter Bezugnahme auf die beigefügten Zeichnungen beschrieben. Es zeigen:
- Fig. 1: das Prinzip einer an einem Roboter angeordneten Schweißzange mit Antrieb und Zangenausgleich; und
- Fig. 2: teilweise im Querschnitt die erfindungsgemäße Kraftübertragungsvorrichtung.

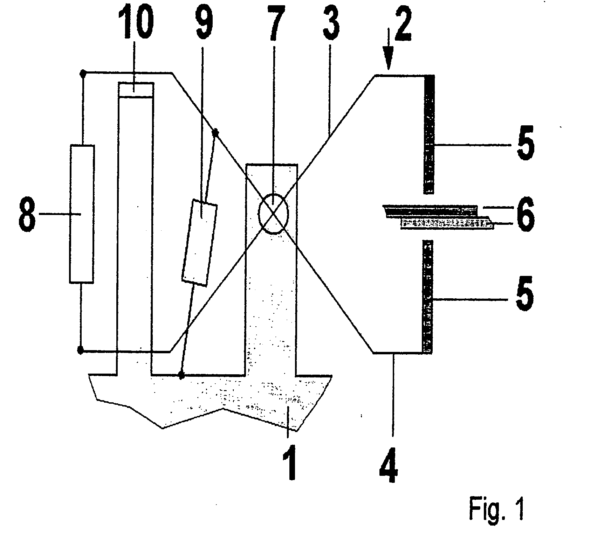

Wie dies in Figur 1 gezeigt ist, ist an einem verfahrbaren Teil 1 eines Roboters eine Schweißzange 2 angebracht. Die beiden Arme 3, 4 der Schweißzange tragen an ihren vorderen Enden Elektroden 5, die gegen Bleche 6 gedrückt werden können, die miteinander verschweißt werden sollen. Zu diesem Zweck sind die Schweißarme 3, 4 bei 7 am Roboterbauteil 1 schwenkbar gelagert und können durch einen Antrieb 8 zusammengedrückt werden. Bei 9 ist ein weiterer Antrieb gezeigt, der Zangenausgleich. Ist die Schweißzange mit dem Bauteil 1 durch die Robotersteuerung an die Bleche 6 grob herangefahren, wird der Zangenausgleich 9 betätigt, um den Schweißarm 4 mit der Elektrode 5 an die Bleche heranzufahren. Ist dies erreicht und wird dabei eine geeignete Druckkraft auf die Bleche 6 ausgeübt, wird der Antrieb 8 betätigt, um auch den anderen Schweißarm 3 mit seiner Elektrode 5 an die Bleche 6 heranzufahren, so dass der Schweißvorgang beginnen kann.

Nach Beendigung des Schweißvorgangs soll die Schweißzange schnell mit großen Beschleunigungen an eine andere Schweißposition verfahren werden. Zu diesem Zweck wird der Arm 4 in Figur 1 im Gegenuhrzeigersinn durch den Zangenausgleich 9 gegen einen Anschlag 10 gedrückt, der am Roboterbauteil 1 befestigt ist. Dies ist wie weiter unten näher ausgeführt werden wird mit großer Kraft möglich, so dass sich der Schweißarm 4 während der Beschleunigungen des Roboters nicht verschieben kann. Der Arm 3 wird dabei durch den Antrieb 8 relativ zum Schweißarm 4 festgehalten.

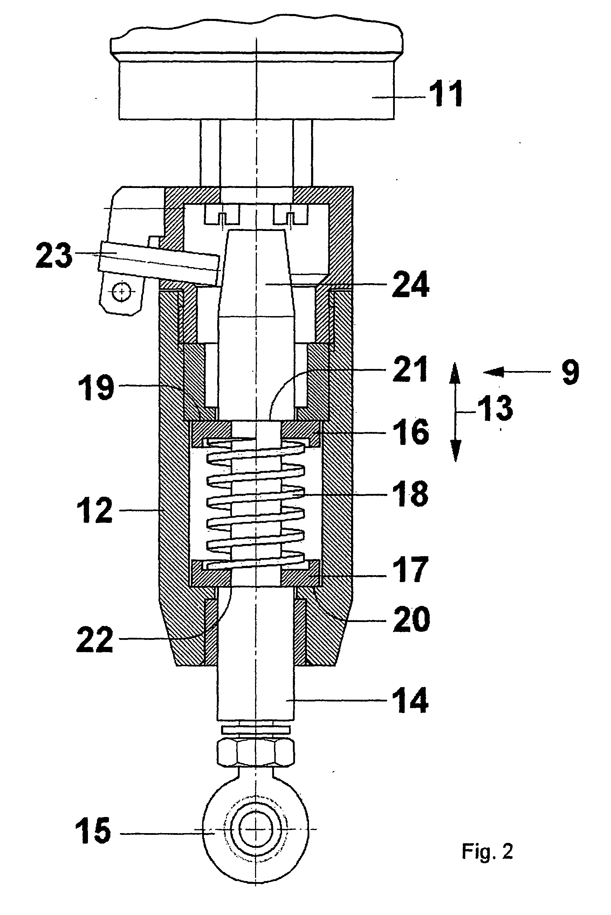

Der Antrieb 9 ist in Figur 2 im Detail, teilweise im Schnitt gezeigt. Er weist einen Elektromotor 11 auf, mit dem ein hülsenförmiges erstes Element 12 nach oben und nach unten in Richtung des Doppelpfeils 13 bewegt werden kann. Im hülsenförmigen ersten Element ist ein zweites Element 14 gelagert, das unten eine Öse 15 zum Befestigen am Schweißarm 4 oder am Roboterteil 1 aufweist, während der Motor 11 am anderen dieser beiden Bauteile gelagert ist.

Im hülsenförmigen Element 12 sind verschiebbar Anschläge 16, 17 gelagert, zwischen denen eine Schraubenfeder 18 angeordnet ist, die die Anschläge 16, 17 gegen Anschlagflächen 19 bzw. 20 des hülsenförmigen ersten Elementes drückt. Das zweite Element 14 weist eine Schulter 21 auf, durch die der Anschlag 16 nach unten gedrückt werden kann, wenn auf die Kraftübertragungsvorrichtung eine Zugkraft ausgeübt wird. In diesem Falle wird die Feder 18 zusammengedrückt. Die Feder 18 wird ebenfalls zusammengedrückt, wenn eine Druckkraft auf die Kraftübertragungsvorrichtung ausgeübt wird, und zwar durch die Schulter 22 des zweiten Elements 14, die auf den Anschlag 17 wirkt. Die Verlängerung/Verkürzung ist dabei aufgrund der linearen Elastizitätseigenschaften der Feder in weiten Bereichen linear von der Kraft abhängig. Erst wenn die Feder sehr stark zusammengedrückt wird, ist diese Proportionalität nicht mehr gegeben. Ab einer gewissen Kraft wirkt dann die Kraftübertragungsvorrichtung als starres Element.

Die Verlängerung oder Verkürzung der Kraftübertragungsvorrichtung wird durch einen Abstandssensor 23 detektiert, der den Abstand zu einem konusförmigen Element 24 detektiert, das am zweiten Element 14 angebracht ist. Wird das zweite Element 14 nach innen gedrückt, so verringert sich der Abstand zwischen konusförmigen Element 24 und Abstandssensor 23, so dass die Verkürzung (oder entsprechend die Verlängerung) und damit bei bekannter Federkonstante die Kraft bestimmt werden kann. Durch Wechseln der Feder kann dabei die Federkonstante und damit die Verlängerung/Verkürzung pro angelegter Kraft variiert werden.

## Patentansprüche

1. Kraftübertragungsvorrichtung, insbesondere für den Zangenausgleich einer Schweißzange, mit einem ersten (12) und einem zweiten (14) Element, von denen eines (12, 14) mit einem Antrieb (11) und das andere (14,12) mit einem angetriebenen Teil (4) verbindbar ist, **dadurch gekennzeichnet,**
- **dass** das zweite Element (14) im ersten Element (12) der Kraftübertragungsrichtung verschiebbar gelagert ist,
- **dass** im ersten Element (12) zwei in Kraftübertragungsrichtung verschiebbare Anschläge (16, 17) gelagert sind, zwischen denen eine Druckfeder (18) angeordnet ist, die die Anschläge (16, 17) im Ruhezustand gegen in Kraftübertragungsrichtung einander gegenüberstehende Anschlagflächen (19, 20) des ersten Elements (12) drückt,
- und **dass** das zweite Element (14) einen ersten Vorsprung (21), mit dem der erste Anschlag (16) von seiner Anschlagfläche (19) abhebbar ist, und einen zweiten Vorsprung (22) aufweist, mit dem der zweite Anschlag (17) von seiner Anschlagfläche (20) abhebbar ist.

2. Kraftübertragungsvorrichtung nach Anspruch 1, **dadurch gekennzeichnet, dass** der Antrieb elektrisch ist.

3. Kraftübertragungsvorrichtung nach Anspruch 1 oder 2, **dadurch gekennzeichnet, dass** das erste Element (12) das zweite Element (14) hülsenförmig umgreift.

4. Kraftübertragungsvorrichtung nach einem der Ansprüche 1 bis 3, **dadurch gekennzeichnet, dass** die Druckfeder eine Schraubenfeder (18) ist.

5. Kraftübertragungsvorrichtung nach einem der Ansprüche 1 bis 4, **dadurch gekennzeichnet, dass** die Anschläge (16, 17) das zweite Element (14) umschließende Scheiben sind.

6. Kraftübertragungsvorrichtung nach Anspruch 4 oder 5, **dadurch gekennzeichnet, dass** die Druckfeder (18) das zweite Element (14) umschließt.

7. Kraftübertragungsvorrichtung nach einem der vorangehenden Ansprüche, **dadurch gekennzeichnet, dass** sie eine Einrichtung (23, 24) zum Anzeigen und/oder Messen von Änderungen ihrer Länge aufweist.

8. Kraftübertragungsvorrichtung nach Anspruch 7, **dadurch gekennzeichnet, dass** die Einrichtung zum Anzeigen und/oder Messen von Änderungen der Länge eine konische Fläche (24) an einem und einen Abstandssensor (23) am anderen Element aufweist.

9. Kraftübertragungsvorrichtung nach Anspruch 8, **dadurch gekennzeichnet, dass** die konische Fläche (24) am zweiten Element (14) und der Abstandssensor (23) am ersten Element (12) angeordnet ist.

10. Schweißzange mit Zangenausgleich, **dadurch gekennzeichnet, dass** sie eine Kraftübertragungsvorrichtung nach einem der Ansprüche 1 bis 9 aufweist.
